# EUROPÄISCHE PATENTSCHRIFT

(11) **EP 4 274 790 B1**
(45) Veröffentlichungstag und Bekanntmachung des Hinweises auf die Patenterteilung: **13.05.2026**
(21) Anmeldenummer: 22847121.5
(22) Anmeldetag: 21.12.2022
(51) Int. Cl.: B65G 1/04, B65G 1/137

(54) **LAGER- UND ENTNAHMESYSTEM SOWIE VERWENDUNG EINES ARBEITSPLATZ FÜR EIN LAGER- UND ENTNAHMESYSTEM UND VERFAHREN ZUM BETREIBEN EINES LAGER- UND ENTNAHMESYSTEMS**
STORAGE AND REMOVAL SYSTEM AND ALSO USE OF A WORKSTATION FOR A STORAGE AND REMOVAL SYSTEM AND METHOD FOR OPERATING A STORAGE AND REMOVAL SYSTEM
SYSTÈME DE STOCKAGE ET DE PRÉLÈVEMENT, UTILISATION D'UN POSTE DE TRAVAIL POUR UN SYSTÈME DE STOCKAGE ET DE PRÉLÈVEMENT, ET PROCÉDÉ DE FONCTIONNEMENT D'UN SYSTÈME DE STOCKAGE ET DE PRÉLÈVEMENT

(30) Priorität: 29.12.2021 DE 102021215078
(43) Veröffentlichungstag der Anmeldung: 15.11.2023
(73) Patentinhaber: Gebhardt Fördertechnik GmbH, 74889 Sinsheim (DE)
(72) Erfinder: GEBHARDT, Marco, 74889 Sinsheim (DE)
(74) Vertreter: Ullrich & Naumann PartG mbB
(86) Internationale Anmeldenummer: PCT/DE2022/200310
(87) Internationale Veröffentlichungsnummer: WO 2023/126036

(56) Entgegenhaltungen:
- WO-A1-2014/195901
- WO-A1-2022/243153
- WO-A1-2023/274863
- CN-A- 110 861 865

## Beschreibung

Die Erfindung betrifft ein Lager- und Entnahmesystem für Behälter, umfassend:
eine Gitterstruktur mit einer Vielzahl von Gitterzellen, wobei jede Gitterzelle eine Lagersäule einer unterhalb der Gitterstruktur angeordneten Behälter-Lagerstruktur definiert, wobei die Lagersäulen eingerichtet sind, jeweils einen vertikalen Stapel von Behältern aufzunehmen, und wobei die Gitterstruktur Längstransportwege in einer Längsrichtung und Quertransportwege in einer Querrichtung definiert,
mindestens ein zum Fahren entlang der Längstransportwege und/oder Quertransportwege ausgebildetes Transportfahrzeug für Behälter, und
einen Arbeitsplatz zur Schaffung eines Zugangs zu mindestens einem Behälter, wobei der Arbeitsplatz einen vertikalen Schacht mit einer aus oder zu dem Schacht führenden Zugangsöffnung aufweist, wobei ein Behälter mittels eines dem Transportfahrzeug oder der Gitterstruktur zugeordneten Greifers entlang dem Schacht von einem Transportfahrzeug kommend in Richtung Zugangsöffnung oder entgegengesetzt in Richtung Transportfahrzeug bewegt werden kann.

Des Weiteren betrifft die vorliegende Erfindung Verwendung eines Arbeitsplatzes für ein Lager- und Entnahmesystem.

Schließlich betrifft die vorliegende Erfindung ein Verfahren zum Betreiben eines Lager- und Entnahmesystems.

Lager- und Entnahmesysteme der eingangs genannten Art sind aus der Praxis bekannt und existieren in unterschiedlichen Ausführungsformen. Die WO 2020/094604 A1 zeigt beispielsweise ein solches Lager- und Entnahmesystem 1 für Behälter 106. Das Lager- und Entnahmesystem 1 ist als Blocklager ausgebildet. Mittels eines Arbeitsplatzes 10, beispielsweise ein Kommissionierarbeitsplatz, wird ein Zugang zu den Behältern 106 geschaffen. Der Arbeitsplatz 10 kann an unterschiedlichen Positionen an einem Lager- und Entnahmesystem 1 angeordnet werden, beispielsweise auf jeder Seite des Blocklagers. Transportfahrzeuge 200 auf dem Blocklager können Behälter 106 direkt auf einen Förderer 41 abgeben, der einen Behälter 106 einem Bedienungspersonal durch eine Zugangsöffnung zu und aus einem vertikalen Schacht des Arbeitsplatzes zuführen kann. Der Arbeitsplatz 10 weist des Weiteren eine schwenkbare Abdeckplatte 36 zur Abdeckung eines Behälters 106 sowie einzelne Abdeckungen 31 auf, um einen individuellen Zugang zu einzelnen Bereichen des Behälters 106 zu schaffen.

Des Weiteren ist auch aus der WO 2021/165030 A1 ein Lager- und Entnahmesystem 1 für Behälter 106 mit einem Arbeitsplatz zur Schaffung eines Zugangs zu einem Behälter 106 bekannt. Weiterhin weist das Lager- und Entnahmesystem 2 horizontale Förderer für Behälter 106 auf, um Behälter 106 aus Sicherheitsgründen in einen vorgebbaren Abstand vom Lager- und Entnahmesystem 1 zu transportieren, sodass Bedienpersonal in größerem Abstand vom Lager- und Entnahmesystem 1 tätig sein kann.

Die WO 2014/195901 A1 offenbart die Merkmale des Oberbegriffs des Anspruchs 1.

Bei den bekannten Lager- und Entnahmesystemen ist problematisch, dass die Zugangsöffnung im Schacht grundsätzlich ein Risiko dahingehend mit sich bringt, dass Bedienpersonal versehentlich durch diese Zugangsöffnung in den Schacht greift. Dies kann zu einer Verletzungsgefahr für eine Hand oder einen Arm des Bedienpersonals führen, falls Behälter bei beispielsweise defekten Transportfahrzeugen ungewollt den Schacht hinab und auf den Arm oder die Hand des Bedienpersonals fallen oder ungewollt auf den Arm oder die Hand des Bedienpersonals abgestellt werden. Eine vergleichbare Gefahr liegt vor, wenn versehentlich irgendwelche Gegenstände wie beispielsweise Lagergut unbeabsichtigt den Schacht hinabfallen. Eine ausreichende Sicherheit für den Betrieb der bekannten Lager- und Entnahmesysteme ist somit nicht gewährleistet.

Der vorliegenden Erfindung liegt daher die Aufgabe zugrunde, ein Lager- und Entnahmesystem, eine Verwendung eines Arbeitsplatzes für ein Lager- und Entnahmesystem sowie ein Verfahren zum Betreiben eines Lager- und Entnahmesystems anzugeben, wonach ein sicherer Betrieb mit konstruktiv einfachen Mitteln ermöglicht ist.

Erfindungsgemäß wird die voranstehende Aufgabe durch ein Lager- und Entnahmesystem mit den Merkmalen des Anspruchs 1, durch eine Verwendung eines Arbeitsplatzes mit den Merkmalen des Anspruchs 6 sowie durch ein Verfahren mit den Merkmalen des Anspruchs 7 gelöst.

Danach ist das Lager- und Entnahmesystem gemäß Anspruch 1 dadurch gekennzeichnet, dass im Bereich der Zugangsöffnung eine Lichtschranke oder ein Lichtgitter angeordnet ist und dass die Verriegelungseinrichtung mittels der Lichtschranke oder des Lichtgitters aktivierbar ist.

Anspruch 6 beansprucht die Verwendung des Arbeitsplatzes für dieses Lager- und Entnahmesystems. Schließlich ist das Verfahren zum Betreiben eines Lager- und Entnahmesystems gemäß Anspruch 7 dadurch gekennzeichnet, dass die Verriegelungseinrichtung zum zumindest teilweisen Verschließen des Schachts verwendet und mittels der Lichtschranke oder des Lichtgitters (14) aktiviert wird.

In erfindungsgemäßer Weise ist zunächst erkannt worden, dass durch geschickte Ausgestaltung des Schachts die voranstehende Aufgabe auf überraschend einfache Weise gelöst wird. In weiter erfindungsgemäßer Weise ist hierbei im Konkreten dem Schacht eine Verriegelungseinrichtung zur Verhinderung einer ungewollten Bewegung eines Behälters oder anderer Gegenstände im Schacht zugeordnet. Dabei wird eine ungewollte Bewegung verhindert, die zu einem Berühren und damit möglicherweise Verletzen beispielsweise der Hand oder eines Arms eines Bedienpersonals führt, falls ein Bedienpersonal seine Hand oder seinen Arm durch eine Zugangsöffnung in den Schacht gesteckt. Insbesondere kann Schutz vor versehentlich herabfallenden oder abgelassenen Behältern erreicht werden. Die Verriegelungseinrichtung kann hierbei eine solche ungewollte Bewegung eines Behälters beispielsweise oberhalb der Zugangsöffnung stoppen. Hierdurch wird bei dem erfindungsgemäßen Lager- und Entnahmesystem ein besonders hohes Maß an Sicherheit realisiert, da eine Verletzungsgefahr für Bedienpersonal aufgrund von sich ungewollt im Schacht bewegenden Behältern oder anderen Gegenständen weitestgehend vermieden werden kann.

Folglich sind mit dem erfindungsgemäßen Lager- und Entnahmesystem, der erfindungsgemäßen Verwendung des Arbeitsplatzes und dem erfindungsgemäßen Verfahren ein Lager- und Entnahmesystem, eine Verwendung eines Arbeitsplatzes und ein Verfahren bereitgestellt, wonach ein sicherer Betrieb mit konstruktiv einfachen Mitteln ermöglicht ist.

Der beschriebene Arbeitsplatz kann im Sinne einer Arbeitsstation des Lager- und Entnahmesystems für Bedienpersonal realisiert sein, wobei mehrere Arbeitsplätze oder Arbeitsstationen an oder in einer Gitterstruktur des Lager- und Entnahmesystems realisiert sein können.

Des Weiteren ist in diesem Dokument mit dem Begriff "Behälter" jegliches Behältnis oder jegliche Aufnahmeeinrichtung umfasst, das oder die zum Lagern und/oder Transportieren von geeignetem Fördergut geeignet ist.

Im Hinblick auf eine konstruktiv besonders einfache und dennoch sehr sichere Ausgestaltung kann die Verriegelungseinrichtung in den Schacht einklappbare oder einbringbare Verriegelungselemente aufweisen. Derartige einklappbare oder einbringbare Verriegelungselemente können einen beispielsweise herabfallenden Behälter sicher stoppen, bevor dieser beispielsweise auf eine Hand oder einen Arm eines Bedieners aufschlägt, der seine Hand oder seinen Arm versehentlich durch die Zugangsöffnung in den Schacht eingesteckt hat.

Weiterhin im Hinblick auf eine besonders einfache Konstruktion und hohe Sicherheit können die Verriegelungselemente einen oder mehrere Finger oder Bleche aufweisen oder durch einen oder mehrere Finger oder Bleche gebildet sind. Solche Finger oder Bleche können einfach in den Schacht eingeklappt oder eingebracht werden, wenn dies zum Schutz eines Bedieners erforderlich ist. Dabei können die Verriegelungselemente um beispielsweise 90° schwenken, wobei sie im Ruhezustand parallel zur Richtung der Erstreckung des Schachts und im Betriebszustand senkrecht zu dieser Richtung angeordnet sein können.

Eine weitere Erhöhung des Sicherheitsniveaus kann dadurch erreicht werden, dass mehrere Verriegelungselemente in unterschiedlichen Höhen oder an unterschiedlichen Positionen des Schachts angeordnet sind. So kann in unterschiedlichen Höhen beispielsweise ein herabfallender Behälter gestoppt werden.

In konstruktiv sicherer und einfacher Weise kann die Verriegelungseinrichtung einen mechanischen oder elektrischen Antrieb, beispielsweise einen Elektromotor, aufweisen. Eine mechanische Verriegelungseinrichtung kann beispielsweise von einem Bediener vor dem Verlassen des Arbeitsplatzes betätigt werden, um den Schacht bei Nichtbenutzung des Arbeitsplatzes zu verriegeln und damit zu sichern. Alternativ hierzu kann die Verriegelungseinrichtung einen elektrischen Antrieb aufweisen, der über eine Steuereinrichtung aktiviert werden kann, um die Verriegelung oder Sicherung des Schachts - beispielsweise bei Nichtbenutzung des Arbeitsplatzes - vorzunehmen.

Im Hinblick auf eine noch weiter erhöhte Sicherheit ist die Verriegelungseinrichtung mittels einer Lichtschranke oder eines Lichtgitters aktivierbar. Eine solche Lichtschranke oder ein solches Lichtgitter ist erfindungsgemäß im Bereich der Zugangsöffnung in geeigneter Weise angeordnet werden, um auszulösen, wenn beispielsweise ein Bediener mit seiner Hand in die Zugangsöffnung greift oder kurz davor ist, dies zu tun. In diesem Fall kann durch das Auslösen der Lichtschranke oder des Lichtgitters die Verriegelung und damit Sicherung des Schachts über die Verriegelungseinrichtung erfolgen.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Lager- und Entnahmesystems sowie des erfindungsgemäßen Arbeitsplatzes anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1 und 2: in perspektivischen Darstellungen einen Arbeitsplatz eines bekannten Lager- und Entnahmesystems, in Fig. 1 mit einer Verkleidung der Gitterstruktur und in Fig. 2 ohne Verkleidung, und
- Fig. 3: in einer perspektivischen Darstellung einen Arbeitsplatz eines weiteren Ausführungsbeispiels des erfindungsgemäßen Lager- und Entnahmesystems mit einer Verriegelungseinrichtung für einen Schacht.

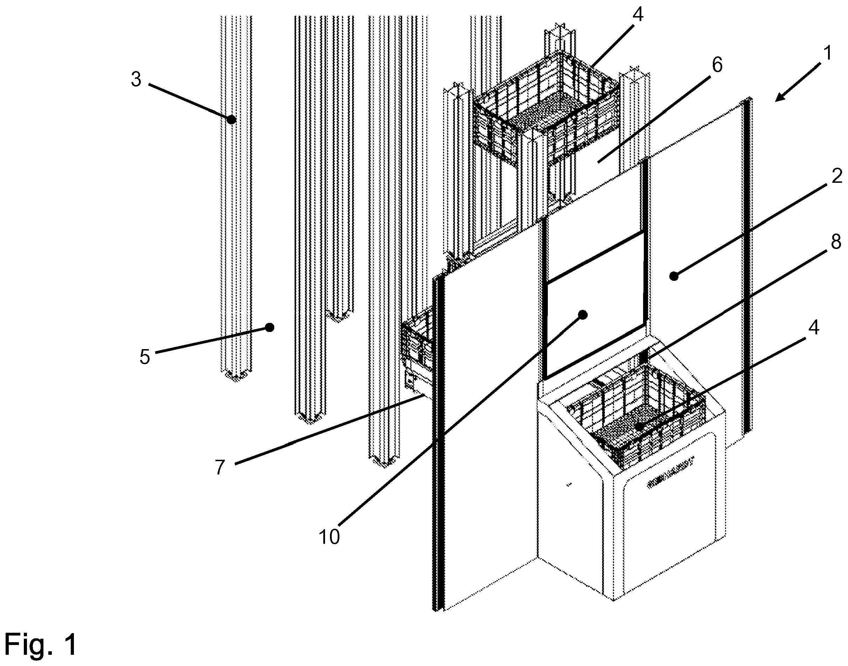

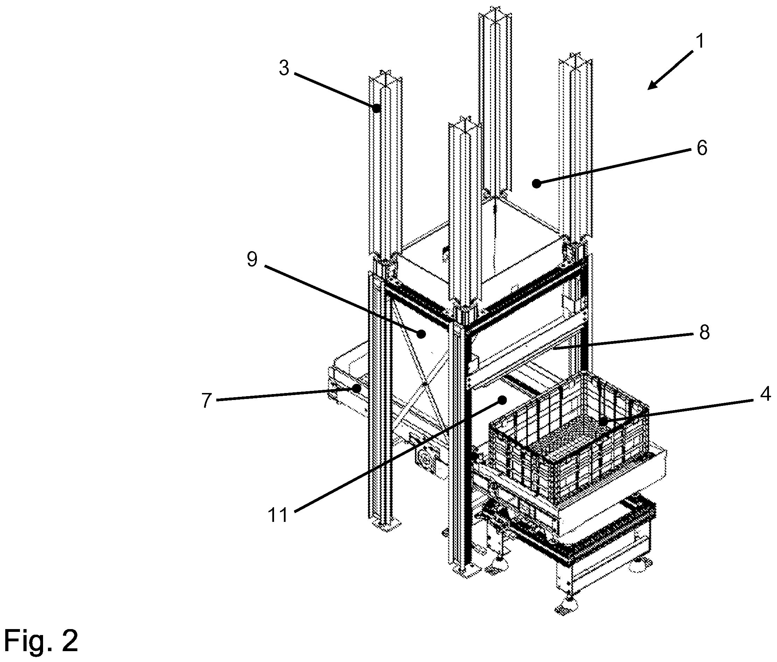

Die Fig. 1 und 2 zeigen in perspektivischen Darstellungen einen Arbeitsplatz 1 eines bekannten Lager- und Entnahmesystems, wobei der Arbeitsplatz 1 in der Darstellung in Fig. 1 teilweise eine Verkleidung 2 für eine Gitterstruktur 3 eines Blocklagers mit Regalstehern aufweist. Fördergut wird in Behältern 4 transportiert. Die Gitterstruktur 3 weist eine Vielzahl von Gitterzellen mit Lagersäulen 5 auf. Ein solcher Arbeitsplatz weist einen Schacht 6 auf, wobei in dem Schacht 6 Behälter 4 mittels eines hier nicht gezeigten Greifers bewegt werden können. Die Behälter 4 können dabei auf einen Förderer 7 abgesetzt oder von dem Förderer 7 aufgenommen werden. Nach einer solchen Aufnahme können die Behälter 4 wieder in Lagersäulen 5 transportiert werden, wozu üblicherweise auf der Gitterstruktur 3 fahrbare und hier nicht gezeigte Transportfahrzeuge dienen.

Der Förderer 7 dient zur horizontalen Bewegung von Behältern 4, wobei die Behälter 4 durch eine Zugangsöffnung 8 aus dem Schacht 6 gefördert werden können. Zur Führung der Behälter 4 und eines im Schacht 6 bewegbaren Greifers, der beispielsweise an einem Transportfahrzeug befestigt ist, ist an dem Schacht 6 seitlich eine Behälter- oder Greiferführung 9 angeordnet. Mit einem derartigen Arbeitsplatz ist ein Zugang zu Behältern 4 und eine Kommissionierung möglich. Zu Wartungszwecken weist die Verkleidung 2 eine Hubtür 10 auf.

Insbesondere in Fig. 2 ist erkennbar, dass der hier verwendete Behälter 4 derart dimensioniert ist, dass er die Zugangsöffnung 8 bei seiner Bewegung durch die Zugangsöffnung 8 fast nur zur Hälfte ausfüllt. Bei höheren Behältern 4 kann die Zugangsöffnung 8 fast vollständig ausgefüllt sein. Bei der in Fig. 2 gezeigten Situation besteht jedoch die Gefahr, dass Bedienpersonal durch den zwischen der Oberkante des Behälters 4 und dem oberen Rand der Zugangsöffnung 8 gebildeten Zwischenraum 11 versehentlich mit einer Hand hindurchgreift und somit die Gefahr besteht, dass ein versehentlich im Schacht 6 herabfallender Behälter 4 oder ein sich dort bewegender Greifer die Hand verletzt.

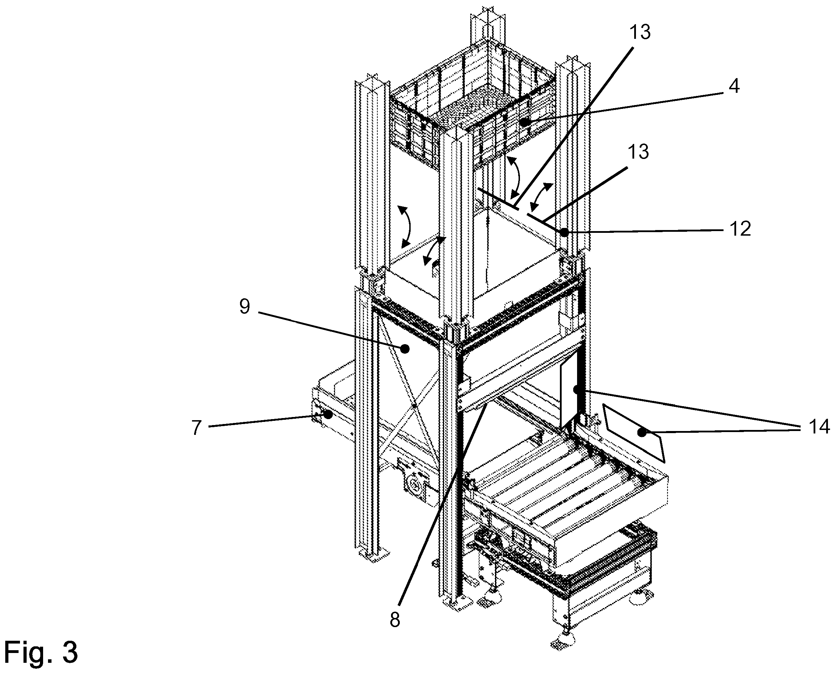

Fig. 3 zeigt in einer perspektivischen Darstellung einen Arbeitsplatz eines Ausführungsbeispiels des erfindungsgemäßen Lager- und Entnahmesystems mit einer Verriegelungseinrichtung 12 für einen Schacht 6. Die Verriegelungseinrichtung 12 weist als Verriegelungselemente klappbare Finger 21 auf, die in den Schacht 6 hineingeklappt oder hineingeschwenkt werden können. Die Finger 21 können dabei um 90° verschwenkt werden, wie dies durch die gekrümmten Doppelpfeile in Fig. 3 gezeigt ist. Durch die klappbaren Finger 21 wird ein mechanischer Anschlag für Behälter 4 gebildet, die beispielsweise von einem Transportfahrzeug abgegeben werden oder versehentlich herabfallen.

Mit der Verriegelungseinrichtung 12 können Verletzungen durch im Schacht 6 abwärts bewegte oder herabfallenden Behälter 4 vermieden werden. Der Arbeitsplatz 1 kann durch eine derartige Verriegelungseinrichtung 12 abgesichert werden. Dabei kann der Schacht 6 immer dann "gesperrt" sein, wenn er nicht aufgrund eines erforderlichen Behälterwechsels geöffnet sein muss. Somit kann bei einem unsachgemäßen Eingreifen in den Schacht 6 kein Behälter 4 versehentlich auf eine Hand eines Bedienpersonals fallen oder abgestellt werden. Die Verriegelungseinrichtung 12 kann einen eigenen Antrieb aufweisen und öffnen, wenn ein Behälterwechsel durchzuführen ist oder eine Steuerung einen solchen Behälterwechsel angemeldet hat.

Im Bereich des Förderers 7 und/oder der Zugangsöffnung 8 können alternativ oder zusätzlich Lichtgitter 14 realisiert werden, die eine fehlerhafte Bedienung oder einen fehlerhaften Eingriff durch Bedienpersonal erkennen. Nach einem solchen Erkennen kann der Arbeitsplatz 1 deaktiviert werden und/oder eine gegebenenfalls offene Verriegelungseinrichtung 12 geschlossen oder aktiviert werden.

Hinsichtlich weiterer vorteilhafter Ausgestaltungen des erfindungsgemäßen Lager- und Entnahmesystems, der erfindungsgemäßen Verwendung des Arbeitsplatzes sowie des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Arbeitsplatz
- 2: Verkleidung
- 3: Gitterstruktur
- 4: Behälter
- 5: Lagersäule
- 6: Schacht
- 7: Förderer
- 8: Zugangsöffnung
- 9: Behälter- oder Greiferführung
- 10: Hubtür
- 11: Zwischenraum
- 12: Verriegelungseinrichtung
- 13: Finger
- 14: Lichtgitter

## Patentansprüche

1. Lager- und Entnahmesystem für Behälter (4), umfassend:
eine Gitterstruktur (3) mit einer Vielzahl von Gitterzellen, wobei jede Gitterzelle eine Lagersäule (5) einer unterhalb der Gitterstruktur (3) angeordneten Behälter-Lagerstruktur definiert, wobei die Lagersäulen (5) eingerichtet sind, jeweils einen vertikalen Stapel von Behältern (4) aufzunehmen, und wobei die Gitterstruktur (3) Längstransportwege in einer Längsrichtung und Quertransportwege in einer Querrichtung definiert,
mindestens ein zum Fahren entlang der Längstransportwege und/oder Quertransportwege ausgebildetes Transportfahrzeug für Behälter (4), und
einen Arbeitsplatz (1) zur Schaffung eines Zugangs zu mindestens einem Behälter (4), wobei der Arbeitsplatz (1) einen vertikalen Schacht (6) mit einer aus oder zu dem Schacht (6) führenden Zugangsöffnung (8) aufweist, wobei ein Behälter (4) mittels eines dem Transportfahrzeug oder der Gitterstruktur (3) zugeordneten Greifers entlang dem Schacht (6) von einem Transportfahrzeug kommend in Richtung Zugangsöffnung (8) oder entgegengesetzt in Richtung Transportfahrzeug bewegt werden kann und wobei dem Schacht (6) eine Verriegelungseinrichtung (12) zur Verhinderung einer ungewollten Bewegung eines Behälters (4) oder anderer Gegenstände im Schacht (6) zugeordnet ist,
**dadurch gekennzeichnet, dass** im Bereich der Zugangsöffnung (8) eine Lichtschranke oder ein Lichtgitter (14) angeordnet ist und dass die Verriegelungseinrichtung (12) mittels der Lichtschranke oder des Lichtgitters (14) aktivierbar ist.

2. Lager- und Entnahmesystem nach Anspruch 1, **dadurch gekennzeichnet, dass** die Verriegelungseinrichtung (12) in den Schacht (6) einklappbare oder einbringbare Verriegelungselemente aufweist.

3. Lager- und Entnahmesystem nach Anspruch 2, **dadurch gekennzeichnet, dass** die Verriegelungselemente einen oder mehrere Finger (13) oder Bleche aufweisen oder durch einen oder mehrere Finger (13) oder Bleche gebildet sind.

4. Lager- und Entnahmesystem nach Anspruch 2 oder 3, **dadurch gekennzeichnet, dass** mehrere Verriegelungselemente in unterschiedlichen Höhen oder an unterschiedlichen Positionen des Schachts (6) angeordnet sind.

5. Lager- und Entnahmesystem nach einem der Ansprüche 1 bis 4, **dadurch gekennzeichnet, dass** die Verriegelungseinrichtung (12) einen mechanischen oder elektrischen Antrieb, beispielsweise einen Elektromotor, aufweist.

6. Verwendung eines Arbeitsplatzes (1) für ein Lager- und Entnahmesystem nach einem der Ansprüche 1 bis 5, wobei der Arbeitsplatz (1) zur Schaffung eines Zugangs zu mindestens einem Behälter (4) ausgebildet ist, wobei der Arbeitsplatz (1) einen vertikalen Schacht (6) mit einer aus oder zu dem Schacht (6) führenden Zugangsöffnung (8) aufweist, wobei ein Behälter (4) mittels eines dem Transportfahrzeug oder der Gitterstruktur (3) zugeordneten Greifers entlang dem Schacht (6) von einem Transportfahrzeug kommend in Richtung Zugangsöffnung (8) oder entgegengesetzt in Richtung Transportfahrzeug bewegt werden kann und wobei dem Schacht (6) eine Verriegelungseinrichtung (12) zur Verhinderung einer ungewollten Bewegung eines Behälters (4) oder anderer Gegenstände im Schacht (6) zugeordnet ist, wobei im Bereich der Zugangsöffnung (8) eine Lichtschranke oder ein Lichtgitter (14) angeordnet ist und dass die Verriegelungseinrichtung (12) mittels der Lichtschranke oder des Lichtgitters (14) aktivierbar ist.

7. Verfahren zum Betreiben eines Lager- und Entnahmesystems nach einem der Ansprüche 1 bis 5, wobei die Verriegelungseinrichtung (12) zum zumindest teilweisen Verschließen des Schachts (6) verwendet und mittels der Lichtschranke oder des Lichtgitters (14) aktiviert wird.

## Claims

1. A storage and removal system for containers (4), comprising:
a latticework structure (3) comprising a multiplicity of latticework cells, wherein each latticework cell defines a storage column (5) of a container-storage structure arranged beneath the latticework structure (3), wherein the storage columns (5) are configured such that they each accommodate a vertical stack of containers (4), and wherein the latticework structure (3) defines longitudinal transport paths in a longitudinal direction and transverse transport paths in a transverse direction,
at least one transport vehicle for containers (4), which vehicle is designed to travel along the longitudinal transport paths and/or transverse transport paths, and
a workstation (1) for providing access to at least one container (4), wherein the workstation (1) comprises a vertical shaft (6) having an access opening (8) leading from or to the shaft (6), wherein a container (4) can be moved along the shaft (6), by means of a gripper assigned to the transport vehicle or to the latticework structure (3), from a transport vehicle toward the access opening (8) or in the opposite direction toward the transport vehicle, and wherein the shaft (6) is assigned a locking device (12) for preventing unwanted movement of a container (4) or other objects in the shaft (6),
**characterized in that** a light barrier or a light curtain (14) is arranged in the region of the access opening (8) and **in that** the locking device (12) can be activated by means of the light barrier or the light curtain (14).

2. The storage and removal system according to claim 1, **characterized in that** the locking device (12) comprises locking elements which can be unfolded or introduced into the shaft (6).

3. The storage and removal system according to claim 2, **characterized in that** the locking elements comprise one or more fingers (13) or plates or are formed by one or more fingers (13) or plates.

4. The storage and removal system according to claim 2 or 3, **characterized in that** a plurality of locking elements are arranged at different heights or in different positions in the shaft (6).

5. The storage and removal system according to any of claims 1 to 4, **characterized in that** the locking device (12) comprises a mechanical or electric drive, for example an electric motor.

6. The use of a workstation (1) for a storage and removal system according to any of claims 1 to 5, wherein the workstation (1) is designed to provide access to at least one container (4), wherein the workstation (1) comprises a vertical shaft (6) having an access opening (8) leading from or to the shaft (6), wherein a container (4) can be moved along the shaft (6), by means of a gripper assigned to the transport vehicle or to the latticework structure (3), from a transport vehicle toward the access opening (8) or in the opposite direction toward the transport vehicle, and wherein the shaft (6) is assigned a locking device (12) for preventing unwanted movement of a container (4) or other objects in the shaft (6), wherein a light barrier or a light curtain (14) is arranged in the region of the access opening (8) and the locking device (12) can be activated by means of the light barrier or the light curtain (14).

7. A method for operating a storage and removal system according to any of claims 1 to 5, wherein the locking device (12) is used to close the shaft (6) at least in part and is activated by means of the light barrier or the light curtain (14).

## Revendications

1. Système de stockage et de prélèvement pour récipients (4), comprenant :
une structure en treillis (3) comprenant une pluralité de cellules en treillis, chaque cellule en treillis définissant une colonne de stockage (5) d'une structure de stockage de récipients disposée sous la structure en treillis (3), les colonnes de stockage (5) étant conçues pour recevoir chacune une pile verticale de récipients (4), et la structure en treillis (3) définissant des voies de transport longitudinales dans une direction longitudinale et des voies de transport transversales dans une direction transversale,
au moins un véhicule de transport pour des récipients (4) conçu pour se déplacer le long des voies de transport longitudinales et/ou transversales, et
un poste de travail (1) destiné à fournir un accès à au moins un récipient (4), le poste de travail (1) comprenant une cage verticale (6) munie d'une ouverture d'accès (8) menant hors de ou vers la cage (6), un récipient (4) pouvant être déplacé le long de la cage (6), au moyen d'un dispositif de préhension associé au véhicule de transport ou à la structure en treillis (3), depuis un véhicule de transport en direction de l'ouverture d'accès (8) ou dans le sens inverse en direction du véhicule de transport, et un dispositif de verrouillage (12) étant associé à la cage (6) pour empêcher un mouvement involontaire d'un récipient (4) ou d'autres objets dans la cage (6),
**caractérisé en ce qu'**une barrière photoélectrique ou une grille photoélectrique (14) est disposée dans la zone de l'ouverture d'accès (8) et **en ce que** le dispositif de verrouillage (12) peut être activé au moyen de la barrière photoélectrique ou de la grille photoélectrique (14).

2. Système de stockage et de prélèvement selon la revendication 1, **caractérisé en ce que** le dispositif de verrouillage (12) comprend des éléments de verrouillage pouvant être repliés ou insérés dans la cage (6).

3. Système de stockage et de prélèvement selon la revendication 2, **caractérisé en ce que** les éléments de verrouillage comprennent un ou plusieurs doigts (13) ou tôles, ou sont formés par un ou plusieurs doigts (13) ou tôles.

4. Système de stockage et de prélèvement selon la revendication 2 ou 3, **caractérisé en ce que** plusieurs éléments de verrouillage sont disposés à différentes hauteurs ou à différentes positions de la cage (6).

5. Système de stockage et de prélèvement selon l'une des revendications 1 à 4, **caractérisé en ce que** le dispositif de verrouillage (12) comprend un entraînement mécanique ou électrique, par exemple un moteur électrique.

6. Utilisation d'un poste de travail (1) pour un système de stockage et de prélèvement selon l'une des revendications 1 à 5, le poste de travail (1) étant conçu pour fournir un accès à au moins un récipient (4), le poste de travail (1) comprenant une cage verticale (6) munie d'une ouverture d'accès (8) menant hors de ou vers la cage (6), un récipient (4) pouvant être déplacé le long de la cage (6), au moyen d'un dispositif de préhension associé au véhicule de transport ou à la structure en treillis (3), depuis un véhicule de transport en direction de l'ouverture d'accès (8) ou dans le sens inverse en direction du véhicule de transport, et un dispositif de verrouillage (12) étant associé à la cage (6) pour empêcher un mouvement involontaire d'un récipient (4) ou d'autres objets dans la cage (6),
dans laquelle une barrière photoélectrique ou une grille photoélectrique (14) est disposée dans la zone de l'ouverture d'accès (8) et le dispositif de verrouillage (12) peut être activé au moyen de la barrière photoélectrique ou de la grille photoélectrique (14).

7. Procédé de fonctionnement d'un système de stockage et de prélèvement selon l'une des revendications 1 à 5, dans lequel le dispositif de verrouillage (12) est utilisé pour fermer au moins partiellement la cage (6) et est activé au moyen de la barrière photoélectrique ou de la grille photoélectrique (14).
